# EUROPÄISCHE PATENTSCHRIFT

(11) **EP 1 884 498 B1**
(45) Veröffentlichungstag und Bekanntmachung des Hinweises auf die Patenterteilung: **02.02.2011**
(21) Anmeldenummer: 07014499.3
(22) Anmeldetag: 24.07.2007
(51) Int. Cl.: C03B 23/09, C03B 23/11, C03B 35/26

(54) **Anordnung zum Herstellen von Glaskörpern**
Assembly for manufacturing glass bodies
Agencement destiné à la fabrication de corps en verre

(30) Priorität: 25.07.2006 DE 102006034878
(43) Veröffentlichungstag der Anmeldung: 06.02.2008
(73) Patentinhaber: AMBEG Dr. J. Dichter GmbH, 10829 Berlin (DE)
(72) Erfinder: Langer, Matthias, 12355 Berlin (DE)
(74) Vertreter: Grünecker, Kinkeldey, Stockmair & Schwanhäusser Anwaltssozietät

(56) Entgegenhaltungen:
- EP-A- 1 369 391
- DE-A1- 1 906 934
- DE-C- 637 506
- DE-U1-202004 004 560
- US-A- 2 878 620
- US-A- 3 066 506

## Beschreibung

Die Erfindung betrifft eine Anordnung zum Herstellen von Glaskörpern unter Verwendung mehrerer um vertikale Achsen rotierende Haltefutter aufweisender Teilsysteme, die durch Rohrzuführungen mit Glasrohren beschickt werden und die die Haltefutter schrittweise längs einer kreisförmigen Umlaufbahn an mindestens einer Arbeitsstation vorbeiführen sowie mit weiteren Teilsystemen zum Verschmelzen von beim Absprengen der Glaskörper von den Glasrohren entstehenden scharfkantigen Rändern.

Bekannt ist eine insbesondere zum Herstellen von Karpulen genutzte Anordnung der vorstehenden Art mit vier Teilsystemen, von denen zwei als Bestandteile eines zentralen Drehtisches mit einem großen Durchmesser ausgebildet sind und zwei von im Bereich des Umfanges des zentralen Drehtisches platzierten, kleineren Drehtischen gebildet werden, die durch Übergabestationen mit dem großen Drehtisch verknüpft sind. Bei der bekannten Anordnung weisen sämtliche Drehtische um vertikale Achsen rotierende Haltefutter auf. Die Beschickung der Haltefutter des großen zentralen Drehtisches erfolgt bei der bekannten Anordnung mittels zweier Rohrzuführungen, die sich ebenso wie die kleineren Drehtische beidseits des zentralen Drehtisches diametral gegenüberliegen. Während die Mündung der Karpule durch im Bereich des Umfangs des zentralen Drehtisches angeordnete Formwerkzeuge aufweisende Arbeitsstationen erzeugt wird, wird der beim Absprengen der halbfertigen Karpule vom Glasrohr gebildete scharfkantige Rand am der Mündung abgewandten, offenen Ende der Karpule in den nachgeschalteten, von den kleinen Drehtischen gebildeten Teilsystemen abgerundet. Dies geschieht durch ein Verfahren, das man in der Praxis als Verschmelzen oder Verflammen bezeichnet.

Die bekannte Anordnung, bei der der zentrale Drehtisch z. B. mit 2 x 16 = 32 über seinen Umfang verteilten Haltefuttern ausgestattet sein kann, erweist sich als sehr leistungsfähig. Wenn sie gleichwohl nicht voll zu befriedigen vermag, so dies insbesondere deshalb, weil infolge der engen Verknüpfung zwischen dem zwei Teilsysteme aufweisenden großen zentralen Drehtisch und den dessen einzelnen Teilsystemen jeweils zugeordneten kleinen Drehtischen Störungen in nur einem Teilsystem regelmäßig mit einem Ausfall der gesamten Anordnung verbunden sind. Der Grund hierfür besteht nicht zuletzt darin, dass Teilabschaltungen von einzelnen Teilsystemen oder Bereichen regelmäßig zu einem veränderten Wärmehaushalt der Gesamtanordnung und zu hieraus resultierenden Qualitätsbeeinträchtigungen der zu fertigenden Produkte führen. Aber nicht nur bei Störungen, sondern auch bei Wartungs- und Umrüstungsarbeiten ist ein Stillstand der Gesamtanordnung nicht zu verhindern. In beiden zuletzt genannten Fällen entstehen zusätzliche Probleme dadurch, dass sich die Wiederinbetriebnahme der Anordnung insbesondere dann, wenn nur eine einzelne Bedienungsperson zur Verfügung steht, insofern als schwierig erweist, als das Nacheinandereinschalten der Brenner in den einzelnen Teilsystemen zu gegenseitigen Beeinflussungen der Temperaturverhältnisse führt, die Nachregulierarbeiten an den Brennern regelmäßig unvermeidbar machen.

Anordnungen zum Herstellen von Glaskörpern sind in den Druckschriften EP 1 369 391 A, EP 1 834 931, US 2,878,620 A, DE 20 2004 004 560 U1, DE 637 506 C, DE 19 06 934 A1 und US 3,066,506 A beschrieben.

Der Erfindung liegt die Aufgabe zugrunde, eine Anordnung zu schaffen, bei der ohne Verminderung der Leistungsfähigkeit der Anordnung die aufgezeigten Probleme nicht auftreten. Gelöst wird diese Aufgabe erfindungsgemäß dadurch, dass jedes der Teilsysteme zur Herstellung der Glaskörper jeweils einen mit Haltefuttern bestückten Drehtisch aufweist, dass den Drehtischen dieser Teilsysteme zwei parallele Förderbänder zugeordnet sind, die mit Aufnahmen für die von den Glasrohren abgetrennten, aus ihrer vertikalen Position in eine horizontale Position überführten Glaskörper versehen sind und durch die die Glaskörper den Teilsystemen zuführbar sind, die zum Verschmelzen mindestens eines Randes der Glaskörper dienen.

Durch die erfindungsgemäße Aufteilung der Teilsysteme für die Herstellung der Glaskörper insbesondere in Form von Karpulen und durch die Entkoppelung dieser beispielsweise die Mündung von Karpulen formenden Teilsysteme von den Teilsystemen zum Verschmelzen des abgesprengten Randes des Glaskörpers werden die geschilderten Probleme gelöst. Beim Ausfall einer Komponente in einem der von Drehtischen gebildeten Teilsysteme können die Drehtische der anderen Teilsysteme weiterarbeiten. Umrüst- und Wartungsarbeiten lassen sich unabhängig voneinander in den einzelnen Drehtische aufweisenden Teilsystemen durchführen. Eine gegenseitige Wärmeeinwirkung zwischen den Drehtischen der Teilsysteme findet nicht statt und die Wiederinbetriebnahme von Teilsystemen bereitet keine Schwierigkeiten. Der Umstand, dass die Glaskörper nach ihrer Formgebung bzw. Abtrennung und Übergabe auf den Bandförderer zwecks Verschmelzung des abgesprengten Randes nicht mehr entsprechend den im Hauptteil der Anordnung verwendeten Teilsystemen aufgeteilt werden, erweist sich in der Praxis insofern als nicht problematisch, als der Bandförderer und die Verschmelzanordnungen bildenden Teilsysteme erfahrungsgemäß praktisch störungsfrei arbeiten.

Weitere Merkmale und Einzelheiten der Anordnung ergeben sich aus den Unteransprüchen, der nachstehenden Beschreibung und den zur Beschreibung gehörenden Zeichnungen. Es zeigen:
- Fig. 1: einen Glaskörper in Form einer fertigen Karpule,
- Fig. 2: die Draufsicht auf eine bekannte, vier Teilsysteme aufweisende Anordnung zur Herstellung von Glaskörpern, insbesondere Karpulen,
- Fig. 3: die Draufsicht auf eine erfindungsgemäße Anordnung mit vier Teilsystemen zur Formgebung der Mündung und zwei Teilsystemen zum Verschmelzen der abgesprengten Ränder von Karpulen,
- Fig. 4: die Seitenansicht der Anordnung gemäß Fig. 3,
- Fig. 5: eine erste Bearbeitungsstation eines Teilsystems zur Formgebung einer Karpulenmündung,
- Fig. 6: eine zweite Bearbeitungsstation eines Teilsystems der Anordnung gemäß Fig. 3 und 4,
- Fig. 7: eine dritte Bearbeitungsstation eines Teilsystems der Anordnung gemäß Fig. 3 und 4,
- Fig. 8: die Seitenansicht einer Übergabestation von einem Teilsystem der Anordnung gemäß Fig. 3 und 4 auf einen Bandförderer zur Überführung der Karpulen in eine Verschmelzstation,
- Fig. 9: eine Seitenansicht des Bandförderers und
- Fig. 10: eine Verschmelzstation.

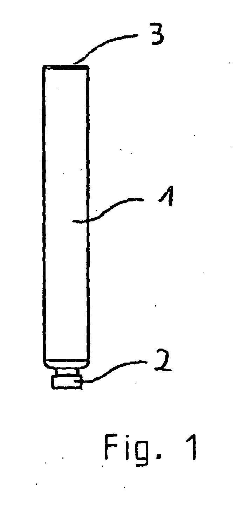

In Figur 1 ist ein von einer Karpule gebildeter Glaskörper 1 gezeigt. Die Mündung 2 der Karpule wurde in einem Teilsystem der Anordnung geformt und ihr offener, abgesprengter Rand 3 anschließend in einem weiteren Teilsystem verschmolzen.

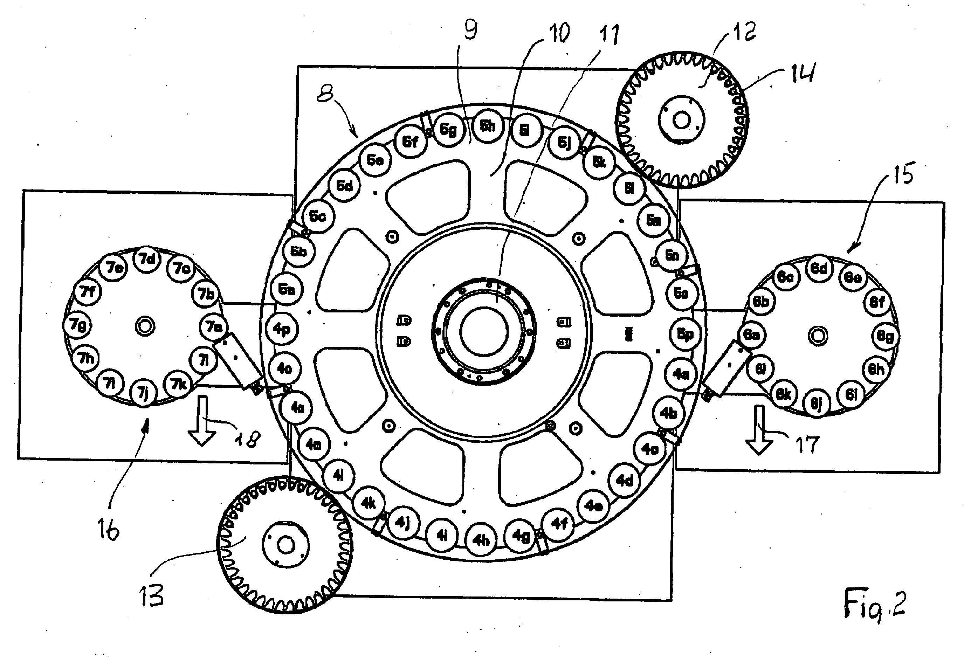

Figur 2 zeigt die Draufsicht auf eine bekannte Anordnung mit einem ersten und zweiten um vertikale Achsen rotierende Haltefutter 4 (a-p) und 5 (a-p) aufweisenden Teilsystem und mit einem ebenfalls um vertikale Achsen rotierende Haltefutter 6 (a-I) und 7 (a-I) aufweisenden dritten und vierten Teilsystem. Die belden ersten Teilsysteme befinden sich auf einem Drehtisch 8 mit einem Haltering 9, der über radiale Streben 10 mit einer Hohlwelle 11 verbunden ist, durch die schrittweise Drehbewegungen in den Haltering 9 einleitbar sind. Im Zuge der getakteten Drehbewegung des Halteringes 9 werden die mittels zweier Rohrzuführungen 12 und 13 mit Glasrohren 14 bestückbaren, um vertikale Achsen rotierenden Haltefutter 4 und 5 diversen Arbeitsstationen zugeführt. Die kleinere, rechts und links liegende Drehtische 15 und 16 aufweisenden Teilsysteme sind ebenfalls mit um vertikale Achsen rotierenden Haltefuttern 6 und 7 versehen, die im Bereich von Übergabestellen 4p/7a und 5p/6a fast fertige Karpulen 1 übernehmen, um lediglich noch deren abgesprengte Ränder 3 zu verschmelzen. Nach dem Durchlaufen der Stationen der Drehtische 15 und 16 werden die endgültig fertigen Karpulen 1 mit Hilfe von Entnahmegreifern 17, 18 entnommen.

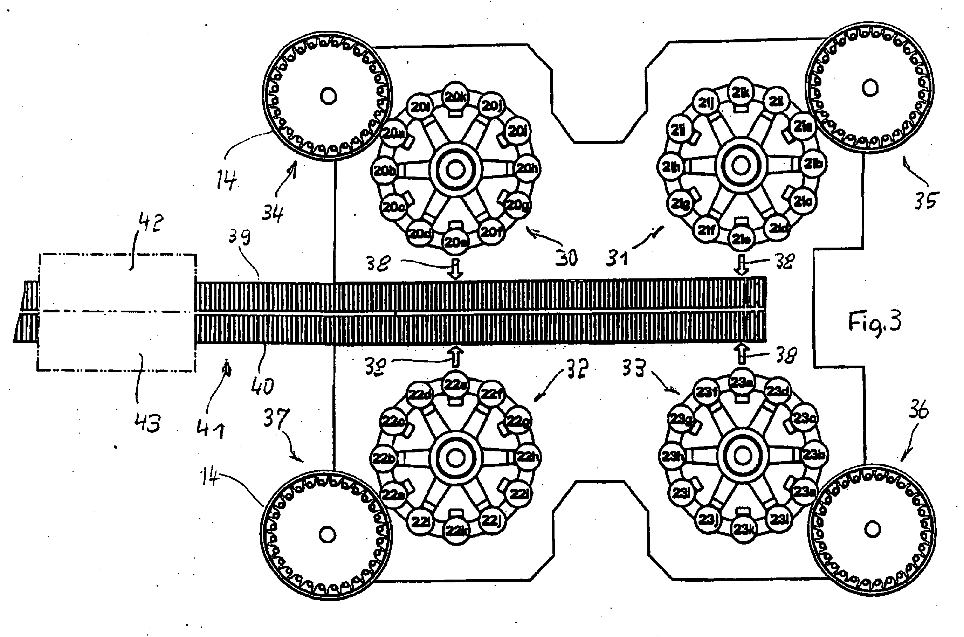

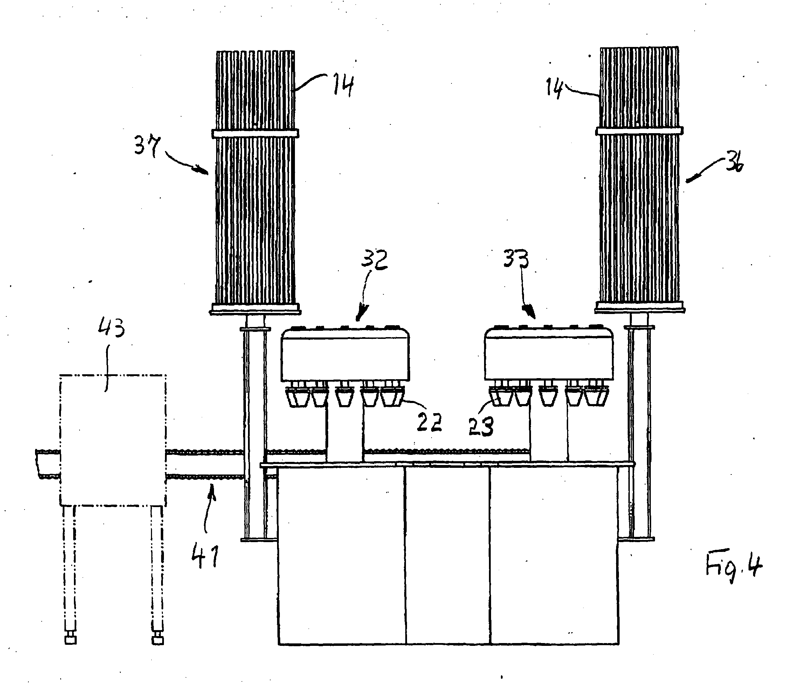

Die Figuren 3 und 4 zeigen die Draufsicht bzw. die Seitenansicht einer erfindungsgemäßen Glasbearbeitungsmaschine mit vier jeweils zwölf, d. h. insgesamt 48 um vertikale Achsen rotierende Haltefutter 20 - 23 aufweisenden Drehtischen 30 - 33. Im Zuge der getakteten Drehbewegung der Drehtische 30 - 33 werden die mittels Rohrzuführungen 34 - 37 mit Glasrohren 14 bestückbaren Haltefutter 20 - 23 diversen, nicht eingezeichneten Arbeitsstationen zugeführt. Nach dem Durchlaufen der Arbeitsstationen werden in von den Glasrohren 14 abgetrennte Teile mit Hilfe von Übergabestationen 38 um 90° gedreht und auf Transportbänder 39 und 40 eines Bandförderers 41 gelegt, der die noch nicht verschmolzene, abgesprengte Ränder 3 aufweisenden Glaskörper bzw. Karpulen 1 auf wärmeisolierten Prismen schrittgeschaltet in den Bereich zweier Verschmelzstationen 42, 43 transportiert.

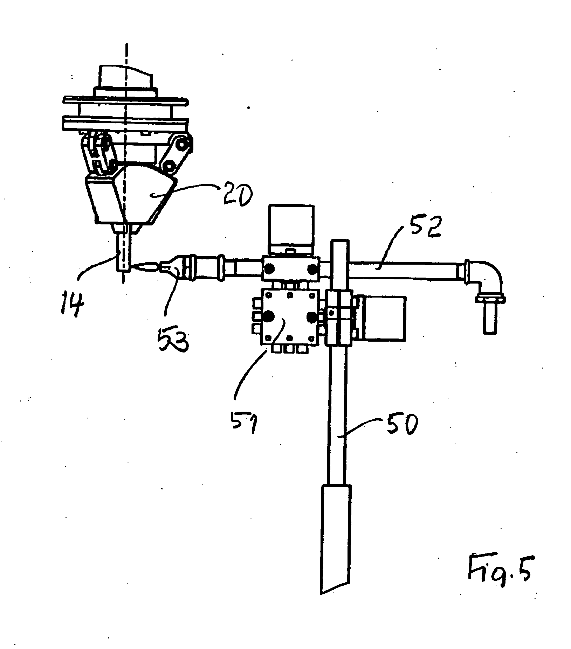

Figur 5 zeigt beispielhaft eine im ersten Teilsystem der Anordnung angeordnete Station zum Erwärmen eines Glasrohres 14. Ein auf einem nicht dargestellten Maschinentisch befestigtes Stativ 50 trägt eine in zwei Richtungen verstellbare Kreuzschlitteneinheit 51, an welcher über ein Brennerrohr 52 ein Brenner 53 befestigt ist. Der Brenner 53 erwärmt das im rotierenden Haftefutter 20 gehaltene Glasrohr 14 an der Bearbeitungsstelle.

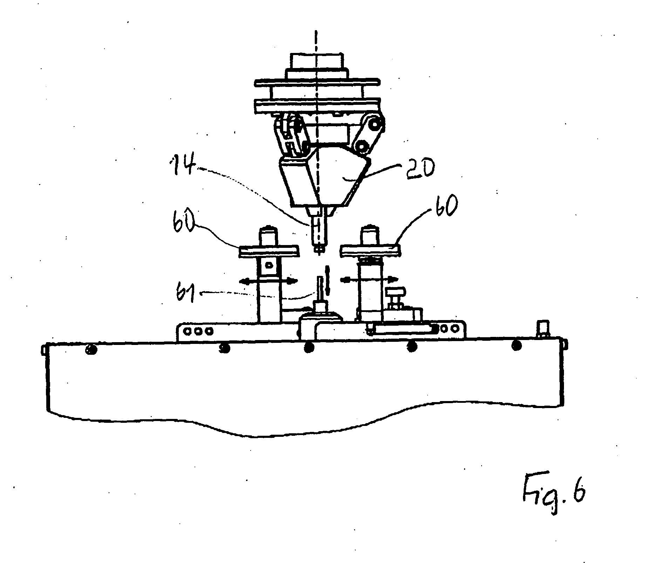

In Figur 6 zeigt eine Formstation zur Formung der Mündung 2 einer Karpule 1. Hier verformen horizontal verschiebbare, rotativ gelagerte Formrollen 60 das eine Ende des vorher erwärmten Glasrohres 14, welches vom rotierenden Haltefutter 20 gehalten wird. Gleichzeitig taucht ein vertikal verschiebbarer Dorn 61 von unten in das Glasrohr 14 ein, um eine definierte Öffnung der Mündung 2 der Karpule 1 zu formen.

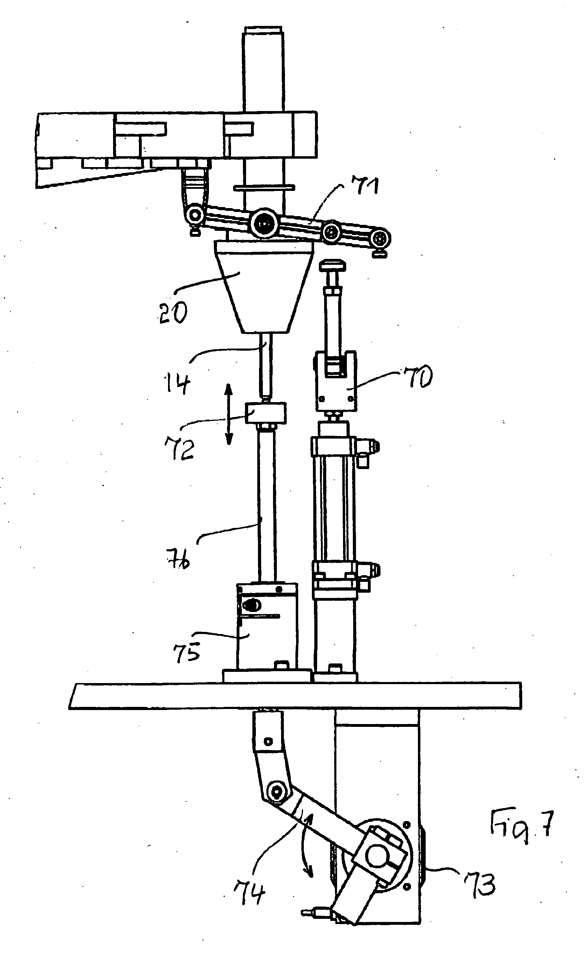

Nach der endgültigen Formgebung des Mündungsbereiches der Karpule 1 wird in einer weiteren, in Figur 7 dargestellten Arbeitsstation die Länge der abzutrennenden Karpule 1 eingestellt. Ein durch einen Futteröffner 70 betätigbarer Hebel 71 öffnet das Haltefutter 20, wodurch das Glasrohr 14 auf einen direkt darunter stehenden Auffallteller 72 fällt. Letzterer senkt sich mit Hilfe einer durch einen Getriebemotor 73 und einen Hebel 74 angetriebenen, linear in einem Lager 75 geführten Stange 76 um einen einstellbaren Wert nach unten ab. Anschließend wird das Haltefutter 20 wieder geschlossen. Durch ein weiteres kurzes Absenken der Auffallplatte 72 wird der schon fertig geformte Mündungsbereich der Karpule 1 wieder freigegeben, die abzutrennende Länge ist nun eingestellt.

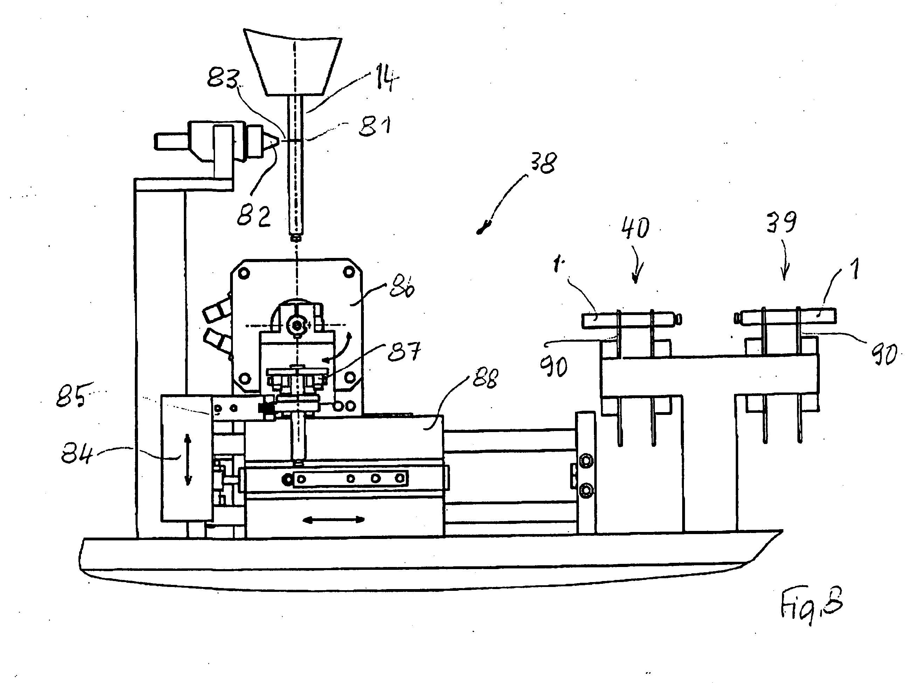

Nach der Einstellung der Länge wird die Karpule 1 in einer der Stationen 20e, 21e, 22e, 23e vom Glasrohr 14 getrennt und mit Hilfe einer Übergabestation 38 auf den Bandförderer 41 überführt. In Figur 8 ist eine Übergabestation 38 dargestellt. Die an der Trennstelle 81 durch einen von einer Wasserdüse 82 erzeugten feinen Wasserstrahl 83 abgesprengte fast fertige Karpule 1 wird von einem an einem Vertikalschlitten 84 befestigten Greifer 85 erfasst und nach unten transportiert. Hier übernimmt ein an einem Drehzylinder 86 befestigter Greifer 87 den Glaskörper und dreht ihn um 90° aus seiner vertikalen Lage in die horizontale Lage. Anschließend wird der Glaskörper mit Hilfe eines Linearschlittens 88 zu den von Prismen 90 gebildeten Auflagen des Bandförderers 41 transportiert.

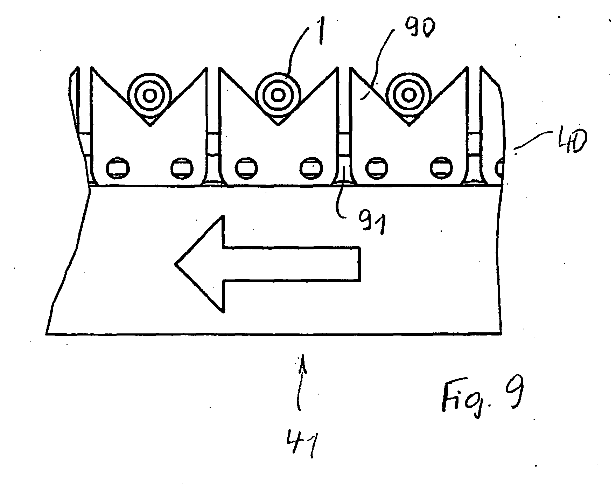

In Figur 9 ist die Seitenansicht des oberen Trums des Transportbandes 40 des Bandförderers 41 dargestellt. Die Karpulen 1 liegt in den Prismen 90, welche an den Laschen zweier Ketten 91 befestigt sind. Die Ketten 91 werden getaktet durch eine Antriebseinheit weitergeschaltet.

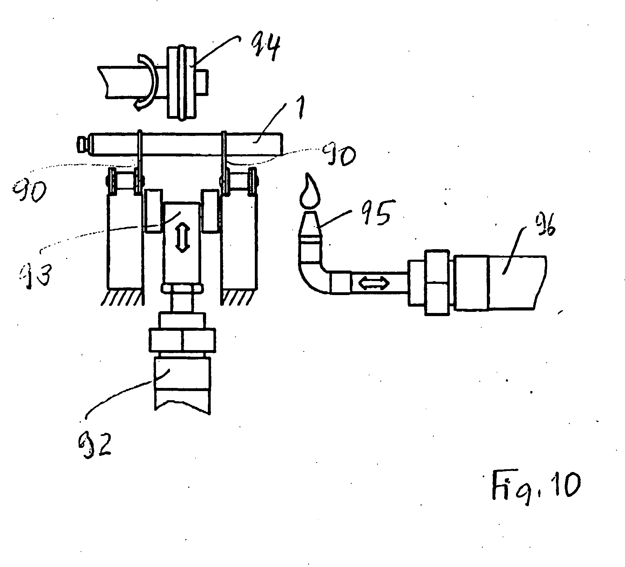

Eine von mehreren Verschmelzstationen ist in Figur 10 dargestellt. Die in den Prismen 90 liegenden Karpulen 1 werden durch ein von einem Pneumatikzylinder 92 angetriebenes Rollenbett 93 angehoben und gegen eine rotierende Antriebsrolle 94 gedrückt. Anschließend wird ein Brenner 95 mit Hilfe eines Pneumatikzylinders 96 nach links verfahren, so dass der Rand der Karpule 1 verschmolzen wird.

An die Verschmelzstationen können sich bei Bedarf weitere Bearbeitungsstationen auf einer oder beiden Seiten des verlängerten Bandförderers 41 anschließen, um beispielsweise Fingerauflagen an einen Spritzenkörper anzuformen.

Die Abstände zwischen den jeweils auf einer Seite des Bandförderers angeordneten Drehtischen müssen auf die Teilung der Aufnahmen der Förderbänder des Bandförderers und die Länge der von den Förderbändern jeweils zu tätigenden Schritte abgestimmt sein. Im beschriebenen Fall rückt der Bandförderer bei jedem Fördertakt um zwei Aufnahmen vor, wobei durch den Abstand zwischen den Drehtischen sichergestellt ist, dass bei den den Drehtischen zugeordneten Übergabestationen stets eine freie Aufnahme der Förderbänder nachgeschaltet ist. Es versteht sich, dass bei einer Erhöhung der Zahl der Drehtische auf einer Seite des Bandförderers die Länge der Schritte, die der Bandförderer ausführt, an die Zahl der Drehtische angepasst werden muss. Beim Einsatz von drei Drehtischen auf einer Seite des Bandförderers ist folglich der einer zweifachen Teilung entsprechende Doppelschritt durch einen einer dreifachen Teilung entsprechenden Dreifachschritt zu ersetzen.

Durch die Umgestaltung des auf einem gemeinsamen Drehtisch vorgesehenen ersten und zweiten Teilsystems der bekannten Anordnung in mehrere eigenständige, voneinander unabhängige Teilsysteme und durch die Verlagerung des Verschmelzvorganges aus dem dritten und vierten Teilsystem der bekannten Anordnung in zwei zusätzliche Teilsysteme sind die Vorteile der bekannten Anordnung, wie hohe Produktivität und raumsparende Bauweise, mit den Vorteilen von Einzelmaschinen, wie fehlende gegenseitige Beeinflussung, geringe Ausfallwahrscheinlichkeit des Gesamtsystems und einfache Inbetriebnahme, vereint worden. Aufgrund der kleineren Durchmesser der den vier Teilsystemen zugeordneten Drehtische der neuen Anordnung lassen sich sehr hohe Taktzahlen realisieren, da die im Verhältnis zum Durchmesser des zentralen Drehtisches der bekannten Anordnung kleineren Durchmesser der vier Drehtische über deutlich kleinere Massenträgheitsmomente verfügen. Durch den Ersatz der satellitenartig angeordneten dritten und vierten Teilsysteme der bekannten Anordnung durch am Ende eines Bandförderers angeordnete Verschmelzstationen bildende zusätzliche Teilsysteme und durch eine Verringerung der nicht genutzten Fläche im Innern der kleineren Drehtische wird nicht nur der Platzbedarf, sondern auch die Wärmeausdehnung der Teilsysteme reduziert, u. a. eine genauere Formgebung ermöglicht. Die bekannte Anordnung eignet sich in besonderem Maße zum Herstellen von Karpulen, sie lässt sich jedoch durchaus auch zur Herstellung von an beiden Enden verschmelzbaren Glasrohrabschnitten und zur Herstellung von Fläschchen und Spritzen nutzen.

## Patentansprüche

1. Anordnung zum Herstellen von Glaskörpern (1) unter Verwendung mehrerer um vertikale Achsen rotierende Haltefutter (20 - 23) aufweisender Teilsysteme, die durch Rohrzuführungen (34 - 37) mit Glasrohren (14) beschickt werden und die die Haltefutter (20 - 23) schrittweise längs einer kreisförmigen Umlaufbahn an mindestens einer Arbeitsstation vorbeiführen sowie mit weiteren Teilsystemen zum Verschmelzen von beim Absprengen der Glaskörper (1) von den Glasrohren (14) entstehenden scharfkantigen Rändern (3), **dadurch gekennzeichnet, dass** jedes der Teilsysteme zur Herstellung der Glaskörper jeweils einen mit Haltefuttern bestückten Drehtisch (30 - 33) aufweist, dass den Drehtischen dieser Teilsysteme parallele Förderbänder (39, 40) zugeordnet sind, die mit Aufnahmen für die von den Glasrohren (14) abgetrennten, aus ihrer vertikalen Position in eine horizontale Position überführten Glaskörper (1) versehen sind und durch die die Glaskörper (1) den Teilsystemen zuführbar sind, die zum Verschmelzen mindestens eines Randes (3) der Glaskörper (1) dienen.

2. Anordnung nach Anspruch 1, **dadurch gekennzeichnet, dass** sie vier Drehtische (30 - 33) aufweist, von denen jeweils zwei auf sich gegenüberliegenden Seiten des Bandförderers (41) angeordnet sind, der schrittweise um jeweils zwei Aufnahmen vorrückt, und dass der Abstand zwischen den Drehachsen der auf jeweils einer Seite des Bandförderers (41) angeordneten Drehtische so gewählt ist, dass zwischen den Drehtischen (30 - 33) und den Förderbändern (39, 40) angeordneten Übergabestationen (38) jeweils eine freie Aufnahme nachgeschaltet ist.

3. Anordnung nach Anspruch 2, **dadurch gekennzeichnet, dass** die Drehtische auf einem im Wesentlichen quadratischen Träger gelagert sind, der im Bereich seiner Ecken mit jeweils einer Rohrzuführung ausgestattet ist.

4. Anordnung nach einem der Ansprüche 1 bis 3, **dadurch gekennzeichnet, dass** den Drehtischen (30 - 33) der Teilsysteme Arbeitsstationen zum Umformen, Ablängen und Abtrennen von Glasrohrabschnitten zugeordnet sind.

5. Anordnung nach einem der Ansprüche 1 bis 4, **dadurch gekennzeichnet, dass** die von den Drehtischen (30 - 33) gebildeten Teilsysteme zur Herstellung der Mündung (2) von Karpulen dienen.

6. Anordnung nach einem der Ansprüche 1 bis 5, **dadurch gekennzeichnet, dass** den Teilsystemen zum Verschmelzen der Ränder (2) auf einer Seite oder auf beiden Seiten verlängerter Förderbänder (39, 40) Bearbeitungsstationen nachgeschaltet sind.

7. Anordnung nach einem der Ansprüche 1 bis 6, **dadurch gekennzeichnet, dass** die Drehtische (30 - 33) der um vertikale Achsen rotierende Haltefutter (20, 23) aufweisenden Teilsysteme beidseits eines Bandförderers (41) mit zwei parallelen Förderbändern (39, 40) angeordnet sind.

## Claims

1. Arrangement for producing glass bodies (1) using several part-systems incorporating retaining chucks (20 - 23) rotating about vertical axes, to which glass tubes (14) are fed by means of tube feeders (34 - 37) and which move the retaining chucks (20 - 23) in a stepped manner along a circular circulation path alongside at least one work station, and with other part-systems for melting sharp edges (3) created as the glass bodies (1) are blasted off the glass tubes (14), **characterised in that** each of the part-systems for producing the glass bodies has a respective rotating table (30 - 33) equipped with retaining chucks, and that parallel conveyor belts (39, 40) of these part-systems are respectively assigned to the rotating tables, the parallel conveyor belts (39, 40) being provided with receptions for the glass bodies (1) separated from the glass tubes (14) transferred from their vertical position into a horizontal position, and by means of which the glass bodies (1) can be fed to the part-systems used to melt at least one edge (3) of the glass bodies (1).

2. Arrangement according to claim 1, **characterised in that** it has four rotating tables (30 - 33), two of which are disposed respectively on oppositely lying sides of the belt conveyor (41), which moves forward in a stepped manner by two receptions each time, and the distance between the axes of rotation of the rotating tables disposed respectively on one side of the belt conveyor (41) is selected so that a free reception is disposed downstream in each case of the transfer stations (38), which are arranged between the rotating tables (30 - 33) and the conveyor belts (39, 40).

3. Arrangement according to claim 2, **characterised in that** the rotating tables are mounted on an essentially square base, which is provided with a respective tube feeder in the region of its corners.

4. Arrangement according to any one of the claims 1 to 3, **characterised in that** work stations for forming, cutting to length and separating glass tube portions are assigned to the rotating tables (30 - 33) of the part-systems.

5. Arrangement according to any one of the claims 1 to 4, **characterised in that** the part-systems formed by the rotating tables (30 - 33) are used to produce the mouth (2) of carpules.

6. Arrangement according to any one of the claims 1 to 5, **characterised in that** processing stations are disposed downstream of the part-systems for melting the edges (2) on one side or on both sides of extended conveyor belts (39, 40).

7. Arrangement according to any one of the claims 1 to 6, **characterised in that** the rotating tables (30 - 33) of the part-systems incorporating retaining chucks (20, 23) rotating about vertical axes are disposed on either side of a belt conveyor (41) with two parallel conveyor belts (39, 40).

## Revendications

1. Agencement destiné à la production de corps en verre (1) avec utilisation de plusieurs sous-systèmes présentant plusieurs mandrins de maintien (20 à 23) rotatifs autour d'axes verticaux, qui sont chargés avec des tubes de verre (14) grâce à des alimentations de tube (34 à 37) et qui font passer les mandrins de maintien (20 à 23) de manière incrémentielle au niveau d'au moins un poste de travail en suivant une orbite circulaire, ainsi que d'autres sous-systèmes destinés à la fusion de bords (3) à angles vifs créés à partir des tubes de verre (14) lors du tranchage des corps en verre (1), **caractérisé en ce que** chacun des sous-systèmes destinés à la production des corps en verre présente respectivement un plateau tournant (30 à 33) équipé de mandrins de maintien, des bandes transporteuses (39, 40) parallèles sont affectées aux plateaux tournants de ces sous-systèmes, ces bandes étant transportées munies de réceptacles pour les corps en verre (1) séparés des tubes de verre (14) et transférés de leur position verticale à une position horizontale et les corps en verre (1) pouvant être amenés, grâce à ces bandes transporteuses, aux sous-systèmes qui servent à la fusion d'au moins un bord (3) des corps en verre (1).

2. Agencement selon la revendication 1, **caractérisé en ce qu'**il présente quatre plateaux tournants (30 à 33), parmi lesquels sont agencés respectivement deux côtés opposés du transporteur à bandes (41), qui avance de manière incrémentielle autour de respectivement deux réceptacles, et l'écart entre les axes de rotation des plateaux tournants agencés sur respectivement un côté du transporteur à bandes (41) est sélectionné de sorte que respectivement un réceptacle libre est placé en aval des postes de transfert (38) agencés entre les plateaux tournants (30 à 33) et les bandes transporteuses (39, 40).

3. Agencement selon la revendication 2, **caractérisé en ce que** les plateaux tournants sont montés sur un support essentiellement carré muni, au niveau de ses coins, de respectivement un acheminement de tube.

4. Agencement selon l'une quelconque des revendications 1 à 3, **caractérisé en ce que** des postes de travail destinés à la déformation, au tronçonnage et à la séparation de sections de tubes de verre sont affectés aux plateaux tournants (30 à 33) des sous-systèmes.

5. Agencement selon l'une quelconque des revendications 1 à 4, **caractérisé en ce que** les sous-systèmes formés par les plateaux tournants (30 à 33) servent à la réalisation de l'embouchure (2) d'ampoules.

6. Agencement selon l'une quelconque des revendications 1 à 5, **caractérisé en ce que** des postes d'usinage sont placés en aval des sous-systèmes destinés à la fusion des bords (2) sur un côté ou sur les deux côtés de bandes transporteuses (30, 40) prolongés.

7. Agencement selon l'une quelconque des revendications 1 à 6, **caractérisé en ce que** les plateaux tournants (30 à 33) des sous-systèmes présentant des mandrins de maintien (20, 23) tournant autour d'axes verticaux sont agencés des deux côtés d'un transporteur à bandes (41) comportant deux bandes transporteuses (39, 40) parallèles.
